# EUROPEAN PATENT APPLICATION

(11) **EP 4 657 150 A1**
(43) Date of publication of application: **03.12.2025**
(21) Application number: 23920044.7
(22) Date of filing: 31.01.2023
(51) Int. Cl.: G02F 1/13357, G02F 1/1335, G02F 1/1333

(54) **DISPLAY DEVICE**

(71) Applicant: LG Electronics Inc., Yeongdeungpo-gu Seoul 07336 (KR)
(72) Inventor: KIM, Daeyong, Seoul 06772 (KR); PARK, Kuenyoung, Seoul 06772 (KR)
(74) Representative: Schott, Jakob Valentin
(86) International application number: PCT/KR2023/001396
(87) International publication number: WO 2024/162491

(57) **Abstract**

A display device is disclosed. The display device of the present disclosure may include: a display panel; a frame located at a rear of the display panel; a substrate located between the display panel and the frame; an optical unit located between the display panel and the substrate; a plurality of light sources arranged in a matrix form on the substrate, the plurality of light sources including first light sources located in columns of a first row and second light sources located in columns of a second row; a plurality of lenses which cover the plurality of light sources; and a supporter located on the substrate, and supporting the optical unit, wherein, based on a surface luminance of the lens, an area between the columns is covered with light of a specific luminance, an area between the first row and the second row is covered with light with a luminance lower than the specific luminance, and the supporter is located between the columns and extends in a direction intersecting with the first and second rows.

## Description

### TECHNICAL FIELD

The present disclosure relates to a display device.

### BACKGROUND ART

As the information society develops, the demand for display devices is also increasing in various forms. In response to this, various display devices such as Liquid Crystal Display Device (LCD), Plasma Display Panel (PDP), Electroluminescent Display (ELD), Vacuum Fluorescent Display (VFD), and Organic Light Emitting Diodes (OLED) have been researched and used in recent years.

Among these, the LCD panel has a TFT substrate and a color substrate that are opposite to each other with a liquid crystal layer interposed therebetween, and may display images by using light provided from a backlight unit.

Recently, much research has been conducted on display devices equipped with mini LEDs of several hundred micrometers as a light source of a backlight unit. In addition, research on the arrangement and structure of a supporter that supports a diffusion plate has also actively been conducted.

### DETAILED DESCRIPTION OF INVENTION

### TECHNICAL PROBLEMS

It is an object of the present disclosure to solve the above-described problems and other problems.

Another object of the present disclosure may be to provide a display device having a supporter that supports a diffusion plate.

Another object of the present disclosure may be to provide a structure for arranging a supporter at between light sources so as to minimize the occurrence of spots on a display screen or the deterioration of image quality due to the supporter.

Another object of the present disclosure may be to provide a structure for coupling a supporter to a frame and a structure in which the supporter can stably support a diffusion plate.

### TECHNICAL SOLUTION

In accordance with an aspect of the present disclosure for achieving the above and other objects, a display device may include: a display panel; a frame located at a rear of the display panel; a substrate located between the display panel and the frame; an optical unit located between the display panel and the substrate; a plurality of light sources arranged in a matrix form on the substrate, the plurality of light sources including first light sources located in columns of a first row and second light sources located in columns of a second row; a plurality of lenses which cover the plurality of light sources; and a supporter located on the substrate, and supporting the optical unit, in which, based on a surface luminance of the lens, an area between the columns is covered with light of a specific luminance, an area between the first row and the second row is covered with light with a luminance lower than the specific luminance, and the supporter is located between the columns and extends in a direction intersecting with the first and second rows.

### EFFECT OF INVENTION

The effects of the display device according to the present disclosure are described as follows.

According to at least one of the embodiments of the present disclosure, a display device having a supporter supporting a diffusion plate can be provided.

According to at least one of the embodiments of the present disclosure, a structure can be provided for arranging a supporter at between light sources so as to minimize the occurrence of spots on a display screen or the deterioration of image quality due to the supporter.

According to at least one of the embodiments of the present disclosure, a structure for coupling a supporter to a frame and a structure in which the supporter can stably support a diffusion plate can be provided.

Further scope of applicability of the present disclosure will become apparent from the following detailed description. However, it should be understood that the detailed description and specific embodiments such as preferred embodiments of the present disclosure are given by way of illustration only, since various changes and modifications within the spirit and scope of the present disclosure may be clearly understood by those skilled in the art.

### BRIEF DESCRIPTION OF THE DRAWING

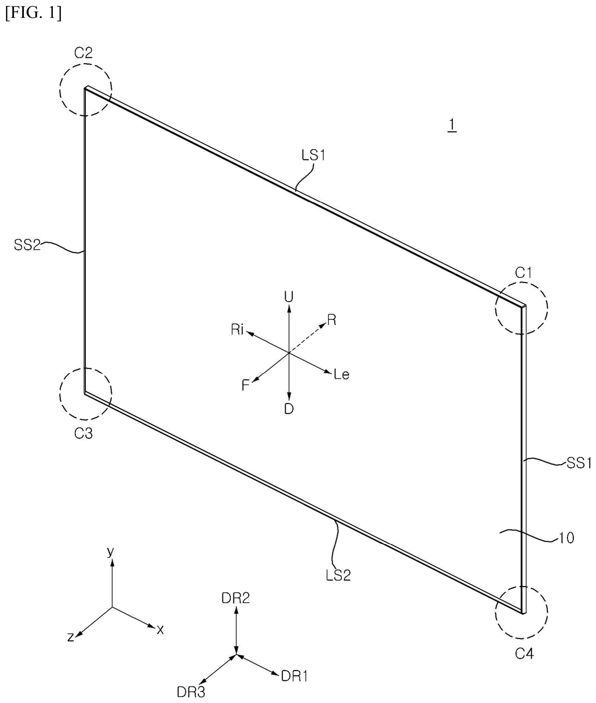

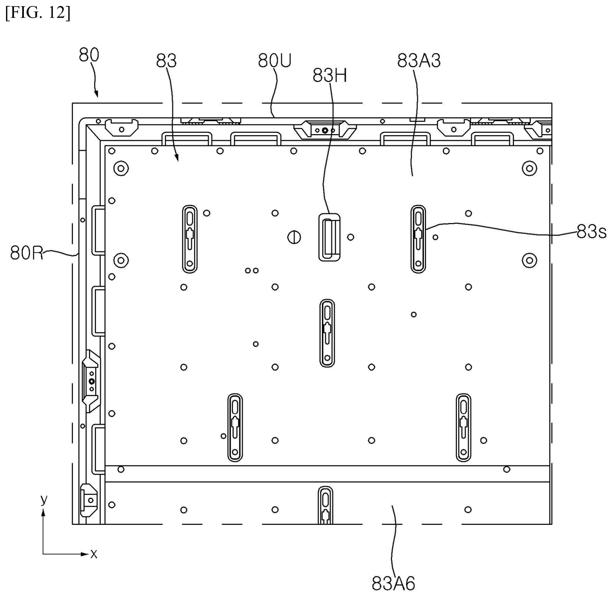

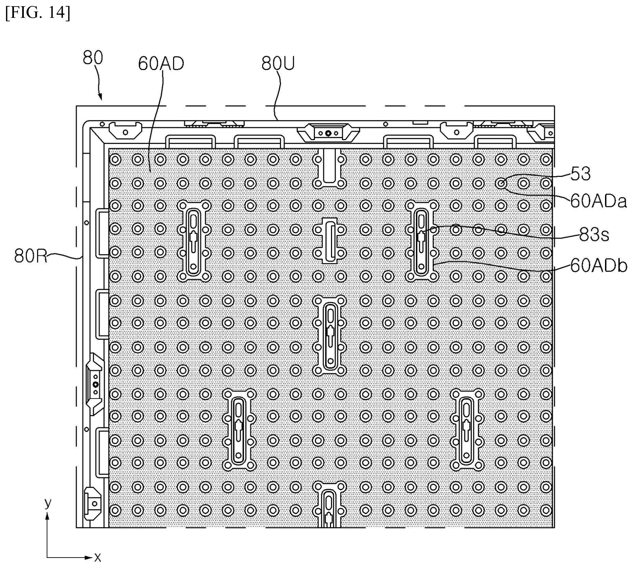

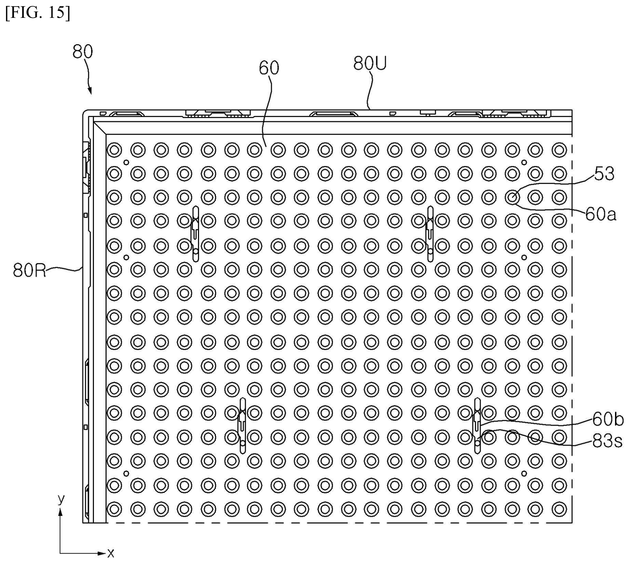

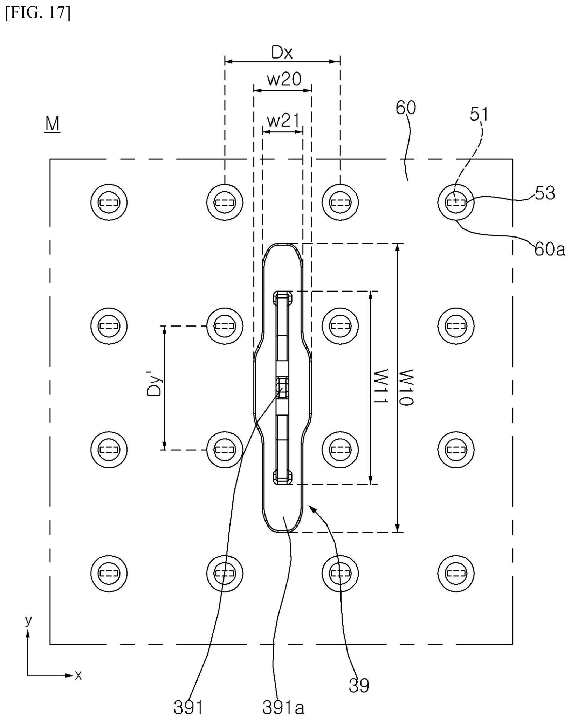

FIGS. 1 to 28 are diagrams illustrating examples of a display device according to embodiments of the present disclosure.

### MODE FOR CARRYING OUT THE INVENTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

Direction indications of up (U), down (D), left (Le), right (Ri), front (F), and rear (R) shown in the drawings are only for convenience of explanation, and the technical concept disclosed in this specification is not limited thereto.

Referring to FIG. 1, a display device 1 may include a display panel 10. The display panel 10 may display an image.

The display device 1 may include a first long side LS1, a second long side LS2 opposite to the first long side LS1, a first short side SS1 adjacent to the first long side LS1 and the second long side LS2, and a second short side SS2 opposite to the first short side SS1. Meanwhile, for the convenience of explanation, it is illustrated and described that the lengths of the first and second long sides LS1, LS2 are longer than the lengths of the first and second short sides SS1, SS2, but it may also be possible that the lengths of the first and second long sides LS1, LS2 are approximately equal to the lengths of the first and second short sides SS1, SS2.

The direction parallel to the long side LS1, LS2 of the display device 100 may be referred to as a left-right direction LR or a first direction DR1. The direction parallel to the short side SS1, SS2 of the display device 100 may be referred to as an up-down direction UD or a second direction DR2. The direction perpendicular to the long side LS1, LS2 and the short side SS1, SS2 of the display device 100 may be referred to as a front-rear direction FR or a third direction DR3.

The direction in which the display panel 110 displays an image may be referred to as a front (F, z), and the opposite direction may be referred to as a rear R. The first long side LS1 side may be referred to as an upper side (U, y). The second long side LS2 side may be referred to as a lower side D. The first short side SS1 side may be referred to as a left side (Le, x). The second short side SS2 side may be referred to as a right side Ri.

The first long side LS1, the second long side LS2, the first short side SS1, and the second short side SS2 may be referred to as an edge of the display device 100. A point where the first long side LS1, the second long side LS2, the first short side SS1, and the second short side SS2 meet each other may be referred to as a corner. The point where the first long side LS1 and the first short side SS1 meet may be referred to as a first corner C1. The point where the first long side LS1 and the second short side SS2 meet may be referred to as a second corner C2. The point where the second long side LS2 and the second short side SS2 meet may be referred to as a third corner C3. The point where the second long side LS2 and the first short side SS1 meet may be referred to as a fourth corner C4.

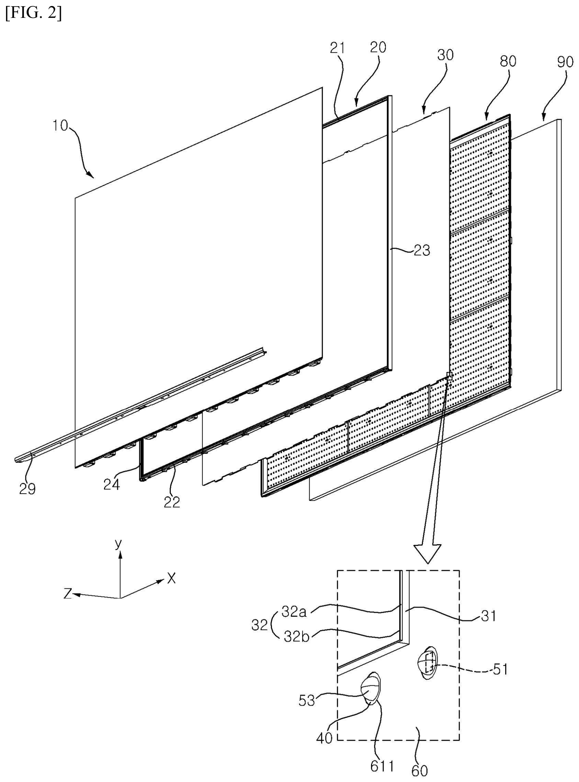

Referring to FIG. 2, the display device may include a display panel 10, a side frame 20, a backlight unit, a frame 80, and a back cover 90.

The display panel 10 may form the front surface of the display device and may display an image. The display panel 10 may display an image by having multiple pixels that output Red, Green or Blue (RGB) in accordance with the timing of each pixel. The display panel 10 may be divided into an active area where an image is displayed and a de-active area where an image is not displayed. The display panel 10 may include a front substrate and a rear substrate that are opposite to each other with a liquid crystal layer interposed therebetween. The display panel 10 may be referred to as an LCD panel 10.

The front substrate may include multiple pixels composed of red, green, and blue sub-pixels. The front substrate may output light corresponding to the color of red, green, or blue according to a control signal.

The rear substrate may include switching elements. The rear substrate may switch a pixel electrode. For example, the pixel electrode may change the molecular arrangement of a liquid crystal layer according to a control signal input from the outside. The liquid crystal layer may include liquid crystal molecules. The arrangement of liquid crystal molecules may be changed in response to the voltage difference generated between a pixel electrode and a common electrode. The liquid crystal layer may transmit light provided from the backlight unit to the front substrate or block the light.

The side frame 20 may extend along the perimeter of the display panel 10. The side frame 20 may cover the lateral side of the display panel 10. The side frame 20 may be coupled to the display panel 10, and may support the display panel 10. The side frame 20 may be referred to as a guide panel 20 or a middle cabinet 20.

The backlight unit may be located at the rear of the display panel 10. The backlight unit may be located at the front of the frame 80, and may be mounted on the frame 80. The backlight unit may be driven by a full driving method or a partial driving method such as local dimming or impulsive. The backlight unit may include light sources 51 that provide light in a forward direction, a substrate 40 on which the light sources 51 are mounted, lenses 53 that cover the light sources 51, a reflective sheet 60 that covers the front surface of the substrate 40, and an optical unit 30 that is located at the front of the reflective sheet 60.

The light source 51 may be a light emitting diode (LED) chip or a package including at least one LED chip. For example, the light source 51 may be a colored LED that emits at least one color from among colors such as red, blue, green, etc., or a white LED. For example, the light source 51 may be a mini LED. A power supply (not shown) of the display device may provide power to the light source 51 through the substrate 40.

Each of the plurality of lenses 53 may cover each of the plurality of light sources 51. A receiving portion (not shown) may be formed on the lower surface of the lens 53, and may surround the light source 51. A dome portion (not shown) may form the upper surface of the lens 53, and may have an approximately hemispherical shape. The lens 53 may include at least one of silicone, polymethyl methacrylate (PMMA), and polycarbonate (PC). Light provided from the light source 51 may be refracted or reflected by the lens 53 and spread with a wider angle of beam spread than the light source 51.

The reflective sheet 60 may include at least one of a metal and a metal oxide, which are reflective materials. For example, the reflective sheet 60 may include a metal and/or a metal oxide having a high reflectivity, such as at least one of aluminum Al, silver Ag, gold Au, and titanium dioxide TiO2. For example, a resin may be deposited or coated on the reflective sheet 60, and may diffuse the light of the light source 51.

The optical unit 30 may be opposite to the display panel 10 with respect to the side frame 20. The optical unit 30 may evenly transmit the light of the light source 51 to the display panel 10. The optical unit 30 may include a diffusion plate 31 and an optical sheet 32.

The diffusion plate 31 may be located between the reflective sheet 60 and the optical sheet 32. The diffusion plate 31 may diffuse the light of the light source 51. In addition, an air gap may be formed between the reflective sheet 60 and the diffusion plate 31. The air gap may serve as a buffer, and the light of the light source 51 may be widely spread by the air gap.

The optical sheet 32 may be adjacent to or in contact with the front surface of the diffusion plate 31. The optical sheet 32 may include at least one sheet. For example, the optical sheet 32 may include a plurality of sheets having different functions, and the plurality of sheets may be adhered to or in close contact with each other. For example, a first optical sheet 32a may be a diffusion sheet, and a second optical sheet 32b may be a prism sheet. The diffusion sheet may prevent the light output from the diffusion plate 31 from being partially concentrated, thereby uniformly distributing the light. The prism sheet may collect the light output from the diffusion sheet and provide it to the display panel 10. At this time, the number and/or positions of the diffusion sheet and the prism sheet may be changed.

For example, the optical sheet 32 may change the wavelength or color of the light provided from the light source 51. For example, the optical sheet 32 may include a red series fluorescent body and/or a green series fluorescent body. In this case, the light source 51 may provide blue series light, and the optical sheet 32 may change the light of the light source 51 to white. The optical sheet 32 may be referred to as a Quantum Dot Sheet (QD sheet).

The frame 80 may be located at the rear of the backlight unit. The display panel 10, the side frame 20, and the backlight unit may be coupled with the frame 80. The frame 80 may support the components of the display device described above and below. For example, the frame 80 may include a metal material such as an aluminum alloy. The frame 80 may be referred to as a main frame 80, a module cover 80, or a cover bottom 80.

The back cover 90 may cover the rear of the frame 80, and may be coupled to the frame 80. For example, the back cover 90 may be an injection molded product of resin material. For another example, the back cover 90 may include a metal material.

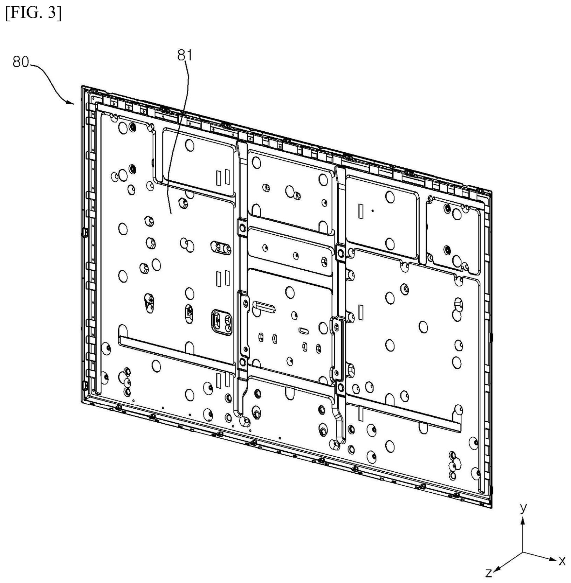

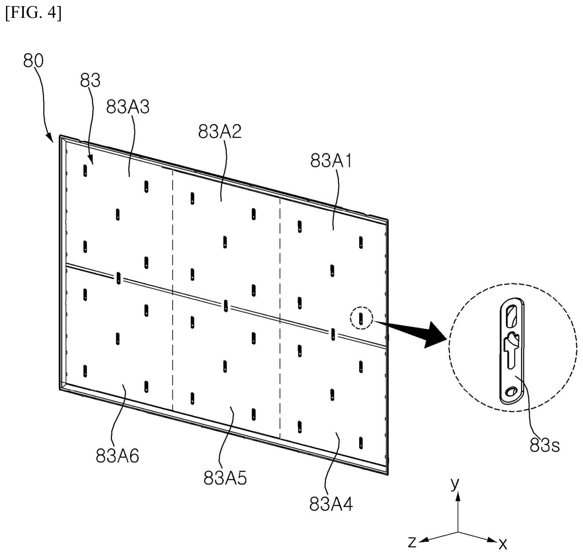

Referring to FIGS. 3 and 4, the frame 80 may include a flat portion 81. The flat portion 81 may form most of the front surface of the frame 80. A heat sink 83 may be coupled to the front surface of the flat portion 81. The front surface of the heat sink 83 may be flat, and may include a plurality of areas 83A1, 83A2, 83A3, 83A4, 83A5, 83A6.

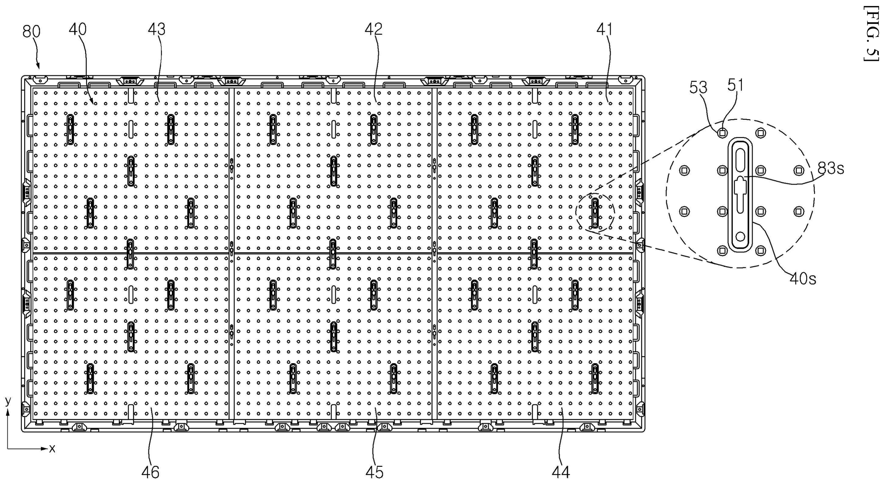

Referring to FIG. 5, the substrate 40 may be coupled to the front surface of the heat sink 83. For example, the substrate 40 may include at least one of polycarbonate (PC), polyethylene terephthalate (PET), glass, and silicon. The substrate 40 may be a printed circuit board (PCB).

The substrate 40 may have a rectangular plate shape. There may be provided at least one substrate 40. The substrate 40 may include a plurality of substrates 41, 42, 43, 44, 45, 46. A first substrate 41, a second substrate 42, a third substrate 43, a fourth substrate 44, a fifth substrate 45, and a sixth substrate 46 may be arranged on a virtual horizontal plane (i.e., a XY plane). Each of the plurality of substrates 41, 42, 43, 44, 45, 46 may be coupled to each of the plurality of areas 83A1, 83A2, 83A3, 83A4, 83A5, 83A6 (see FIG. 4) of the heat sink 83.

Each of the plurality of lenses 53 may cover each of the plurality of light sources 51 mounted on the substrate 40. For example, the lens 53 may have a hemispherical or dome shape. Based on the surface of the lens 53, the luminance of the light output from the light source 51 may decrease as it gets farther away from the surface of the lens 53. The power supply (not shown) of the display device may supply power to the light sources 51 through connectors (not shown) mounted on the rear surface of the substrate 40.

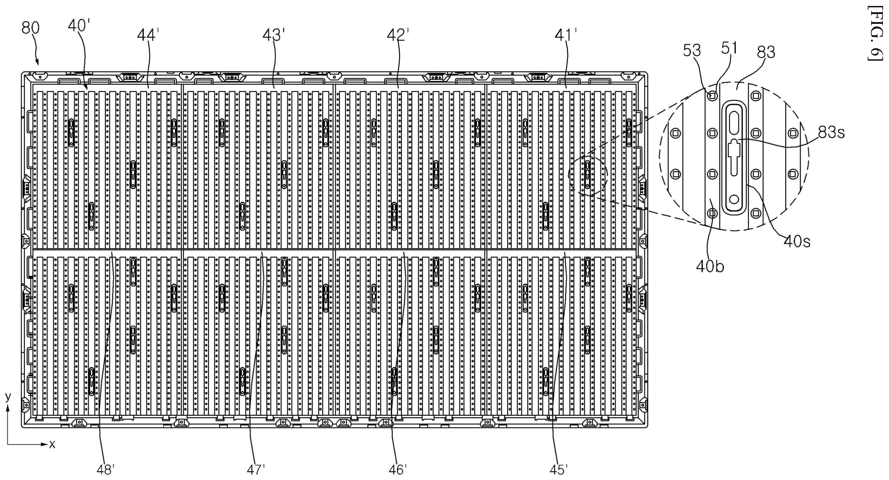

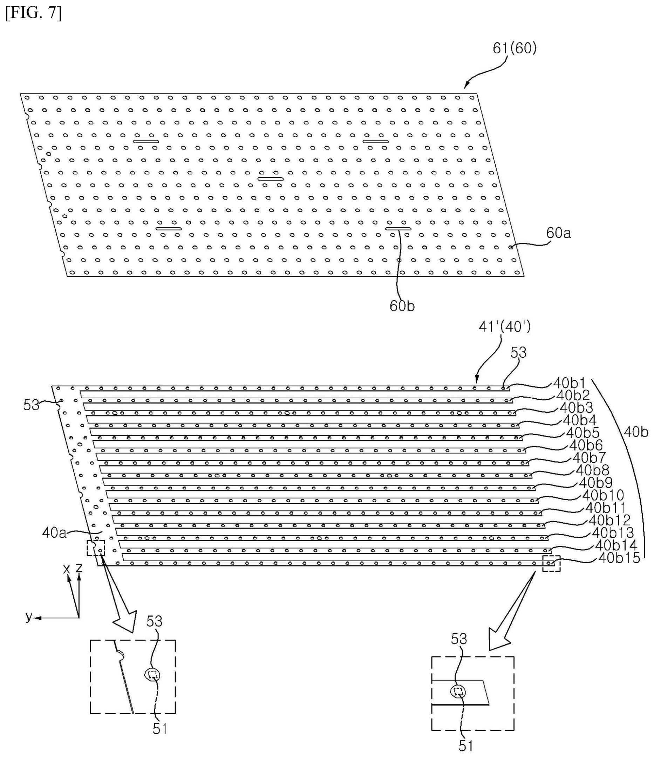

Referring to FIGS. 6 and 7, a substrate 40' may be coupled to the front surface of the heat sink 83. For example, the substrate 40' may include at least one of polycarbonate (PC), polyethylene terephthalate (PET), glass, and silicon. The substrate 40' may be a Printed Circuit Board (PCB).

The substrate 40' may have an overall fork type shape. There may be provided at least one substrate 40'. The substrate 40' may include a plurality of substrates 41', 42', 43', 44', 45', 46'. A first substrate 41', a second substrate 42', a third substrate 43', a fourth substrate 44', a fifth substrate 45', and a sixth substrate 46' may be arranged on a virtual horizontal plane (i.e., a XY plane). Each of the plurality of substrates 41', 42', 43', 44', 45', 46' may be coupled to each of the plurality of areas 83A1, 83A2, 83A3, 83A4, 83A5, 83A6 (see FIG. 4) of the heat sink 83.

The substrate 40' may include a first plate 40a and a plurality of second plates 40b. The first plate 40a may be referred to as a horizontal plate or a body, and the second plate 40b may be referred to as a vertical plate or a rib.

Specifically, the first plate 40a may extend long. For example, the length direction of the first plate 40a may be parallel to the horizontal direction. A connector (not shown) connected to a power source may be mounted on the rear surface of the first plate 40a. The plurality of second plates 40b may extend in a direction intersecting with the length direction of the first plate 40a from one long side of the first plate 40a, and may be spaced apart from each other in the length direction of the first plate 40a. The length direction of the plurality of second plates 40b may be parallel to the vertical direction, and the direction in which the plurality of second plates 40b are spaced from each other may be parallel to the length direction of the first plate 40a, i.e., the horizontal direction. The length of each of the plurality of second plates 40b may be larger than the length of the first plate 40a. The width of each of the plurality of second plates 40b may be smaller than the width of the first plate 40a. A second-first plate 40b1, a second-second plate 40b2, a second-third plate 40b3, a second-fourth plate 40b4, a second-fifth plate 40b5, a second-sixth plate 40b6, a second-seventh plate 40b7, a second-eighth plate 40b8, a second-ninth plate 40b9, a second-tenth plate 40b10, a second-eleventh plate 40b11, a second-twelfth plate 40b12, a second-thirteenth plate 40b13, a second-fourteenth plate 40b14, and a second-fifteenth plate 40b15 may be arranged sequentially in the horizontal direction.

Each of the plurality of lenses 53 may cover each of the plurality of light sources 51 mounted on the first plate 40a and the second plates 40b. For example, the lens 53 may have a hemispherical or dome shape. Based on the surface of the lens 53, the luminance of the light output from the light source 51 may decrease as it gets farther away from the surface of the lens 53. The power supply (not shown) of the display device may supply power to the light sources 51 through the connector mounted on the rear surface of the first plate 40a.

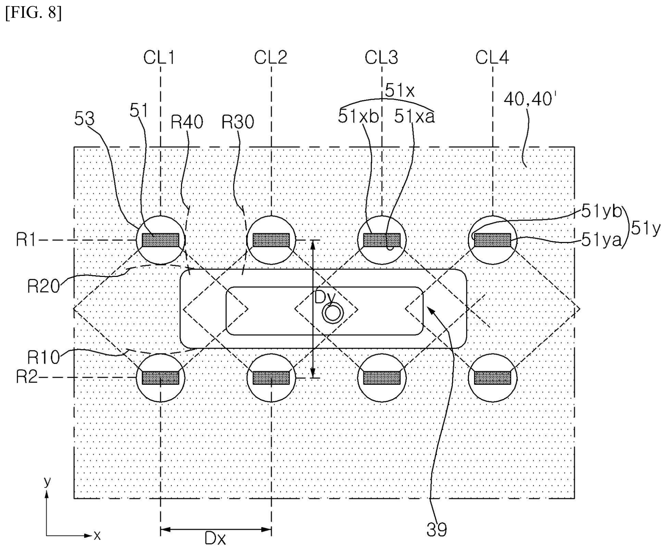

Referring to FIG. 8, the light sources 51 mounted on the substrate 40, 40' may have a cuboidal shape. A first side 51xa, a second side 51xb, a third side 51ya, and a fourth side 51yb may define the lateral side of the light source 51. The first and second sides 51xa, 51xb may be long sides 51x that are opposite to each other, and the third and fourth sides 51ya, 51yb may be short sides 51y that are opposite to each other. The light distribution area of the long sides 51x may be larger than the light distribution area of the short sides 51y.

For example, the long sides 51x may be parallel in the horizontal direction, and the short sides 51y may be parallel in the vertical direction. The first side 51xa may be the lower side of the light source 51, and the second side 51xb may be the upper side of the light source 51. The third side 51ya may be the left side of the light source 51, and the fourth side 51yb may be the right side of the light source 51. For example, the length of the long sides 51x may be 400 micrometers, and the short sides 51y may be 220 micrometers.

The light sources 51 may be arranged in a matrix form on the substrate 40, 40'. The light sources 51 of a first row R1 and the light sources 51 of a second row R2 may be spaced apart from each other in the vertical direction (see Dy). The light sources 51 of a first column CL1, the light sources 51 of a second column CL2, the light sources 51 of a third column CL3, and the light sources 51 of a fourth column CL4 may be spaced apart from each other in the horizontal direction (see Dx).

The light of the first sides 51xa of the light sources 51 of the first row R1 may be directed toward the light sources 51 of the second row R2 through the lenses 53. A first boundary R10 may be a boundary of light having a luminance of a certain ratio with respect to the surface luminance of the lenses 53 covering the light sources 51 of the first row R1. For example, light reaching the first boundary R10 may have a luminance of a specific value among 50% to 70% luminances with respect to the surface luminance 100%.

The first boundary R10 may come into contact with lenses 53 covering the light sources 51 of the second row R2. Alternatively, at least a portion of each of the lenses 53 covering the light sources 51 of the second row R2 may be located inside the first boundary R10.

Light from the second sides 51xb of the light sources 51 of the second row R2 may be directed toward the light sources *51* of the first row R1 through the lenses 53. A second boundary R20 may be a boundary of light having a luminance of a certain ratio with respect to the surface luminance of the lenses 53 covering the light sources 51 of the second row R2. For example, light reaching the second boundary R20 may have a luminance of a specific value among 50% to 70% luminances with respect to the surface luminance 100%. For example, the light reaching the second boundary R20 may have the same luminance as the light reaching the first boundary R10.

The second boundary R20 may be in contact with the lenses 53 covering the light sources 51 of the first row R1. Alternatively, at least a portion of each of the lenses 53 covering the light sources 51 of the first row R1 may be located inside the second boundary R20.

Accordingly, the area between the first row R1 and the second row R2 may be covered by the light having a certain luminance or higher (i.e., light having a luminance of 50 to 70% or higher with respect to the surface luminance 100%) provided from the light sources 51 of the first row R1 and the light having a certain luminance or higher (i.e., light having a luminance of 50 to 70% or higher with respect to the surface luminance 100%) provided from the light sources 51 of the second row R2. For example, the light in the area between the first row R1 and the second row R2 may have a luminance of a specific value (hereinafter, reference luminance) among luminancees of 150 to 170% with respect to the surface luminance 100% of the first row R1 or the second row R2.

The supporter 39 may be arranged horizontally between the rows R1, R2. At this time, a portion of the area between the rows R1, R2 corresponding to the position of the supporter 39 has lower luminance than other portions due to the supporter 39, but the reference luminance is sufficiently high so that stain due to the supporter 39 may not be visible on the screen. Here, the supporter 39 may penetrate the substrate 40, 40' and be coupled to a coupling portion 83s (see FIGS. 5 and 6) described below, and may support the rear surface of the diffusion plate 31.

The light of the third side 51ya of the light sources 51 of the first row CL1 may be directed toward the light sources 51 of the second row CL2 through the lenses 53. A third boundary R30 may be a boundary of light having a luminance of a certain ratio (e.g., a ratio of a specific value among 50 to 70%) with respect to the surface luminance 100% of the lenses 53 covering the light sources 51 of the first row CL1.

The third boundary R30 may be in contact with the lenses 53 covering the light sources 51 of the second row CL2. Alternatively, at least a portion of each of the lenses 53 covering the light sources 51 of the second row CL2 may be located inside the third boundary R30.

The light of the fourth side 51yb of the light sources 51 of the second row CL2 may be directed toward the light sources 51 of the first row CL1 through the lenses 53. A fourth boundary R40 may be a boundary of light having a luminance of a certain ratio (e.g., a ratio of a specific value among 50 to 70%) with respect to the surface luminance 100% of the lenses 53 covering the light sources 51 of the second row CL2. For example, light reaching the fourth boundary R40 may have the same luminance as light reaching the third boundary R30.

The fourth boundary R40 may be in contact with the lenses 53 covering the light sources 51 of the first row CL1. Alternatively, at least a portion of each of the lenses 53 covering the light sources 51 of the first row CL1 may be located inside the fourth boundary R40.

Accordingly, the area between the first column CL1 and the second column CL2 may be covered by the light having a certain luminance or higher (i.e., light having a luminance of 50 to 70% or higher with respect to the surface luminance 100%) provided from the light sources 51 of the first column CL1 and the light having a certain luminance or higher (i.e., light having a luminance of 50 to 70% or higher with respect to the surface luminance 100%) provided from the light sources 51 of the second column CL2. For example, the light in the area between the first column CL1 and the second column CL2 may have a luminance of a specific value (hereinafter, reference luminance) among luminancees of 150 to 170% with respect to the surface luminance 100% of the first column CL1 or the second column CL2.

Similarly, the area between the second column CL2 and the third column CL3 may be covered by the light having a certain luminance or higher provided from the light sources 51 of the second column CL2 and the light having a certain luminance or higher provided from the light sources 51 of the third column CL3. In addition, the area between the third column CL3 and the fourth column CL4 may be covered by the light having a certain luminance or higher provided from the light sources 51 of the third column CL3 and the light having a certain luminance or higher provided from the light sources 51 of the fourth column CL4.

The supporter 39 may be arranged vertically between the columns CL1, CL2, CL3, CL4. At this time, a portion of the area between the columns CL1, CL2, CL3, CL4 corresponding to the position of the supporter 39 has lower luminance than other portions due to the supporter 39, but the reference luminance is sufficiently high so that stain due to the supporter 39 may not be visible on the screen. Here, the supporter 39 may penetrate the substrate 40, 40' and be coupled to the coupling portion 83s (see FIGS. 5 and 6) described below, and may support the rear surface of the diffusion plate 31.

Meanwhile, the distance Dx between the columns CL1, CL2, CL3, CL4 and the distance Dy between the rows R1, R2 may be determined in consideration of the aforementioned light distribution coverage. For example, since the light distribution area of the short sides 51y of the light source 51 directed toward between the columns CL1, CL2, CL3, CL4 is smaller than the light distribution area of the long sides 51x of the light source 51 directed toward between the rows R1, R2, the distance Dx between the columns CL1, CL2, CL3, CL4 may be smaller than the distance Dy between the rows R1, R2. The distance Dx may be referred to as a horizontal pitch Dx, and the distance Dy may be referred to as a vertical pitch Dy.

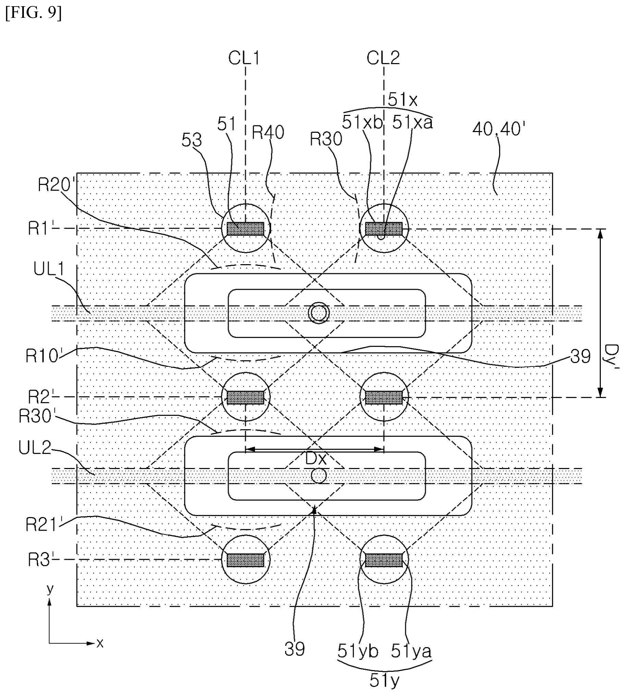

Referring to FIG. 9, the distance Dy' between the rows R1', R2', R3' of the light sources 51 arranged in a matrix form may be larger than the distance Dy between the rows R1, R2 described above with reference to FIG. 8. Accordingly, the number of light sources 51 mounted on the substrate 40, 40' of a specific area may be reduced. The distance Dy' may be referred to as a vertical pitch Dy'.

The light of the first side 51xa of the light sources 51 of the first row R1' may be directed toward the light sources 51 of the second row R2' through the lenses 53. The first boundary R10' may be a boundary of light having a luminance of a certain ratio with respect to the surface luminance of the lenses 53 covering the light sources 51 of the first row R1'. For example, the light reaching the first boundary R10' may have a luminance of a specific value among 50 to 70% luminances with respect to the surface luminance 100%.

The first boundary R10' may be spaced apart from the lenses 53 covering the light sources 51 of the second row R2'. That is, the lenses 53 covering the light sources 51 of the second row R2' may be located outside the first boundary R10'. In other words, light having a lower luminance than the light of the first boundary R10' may be provided from the light sources 51 of the first row R1' into between the first boundary R10' and the lenses 53 of the second row R2'.

The light of the second side 51xb of the light sources 51 of the second row R2' may be directed toward the light sources 51 of the first row R1' through the lenses 53. The second boundary R20' may be a boundary of light having a luminance of a certain ratio with respect to the surface luminance of the lenses 53 covering the light sources 51 of the second row R2'. For example, the light reaching the second boundary R20' may have a luminance of a specific value among 50 to 70% luminances with respect to the surface luminance 100%. For example, the light reaching the second boundary R20' may have the same luminance as light reaching the first boundary R10'.

The second boundary R20' may be spaced apart from the lenses 53 covering the light sources 51 of the first row R1'. That is, the lenses 53 covering the light sources 51 of the first row R1' may be located outside the second boundary R20'. In other words, the light having a lower luminance than light of the second boundary R20' may be provided from the light sources 51 of the second row R2' into between the second boundary R20' and the lenses 53 of the first row R1'.

Accordingly, the area between the first row R1' and the second row R2' may be covered by the light having a first luminance or higher provided from the light sources 51 of the first row R1' and the light having a second luminance or higher provided from the light sources 51 of the second row R2'. The first luminance may be lower than the luminance of the light of the first boundary R10', and may be, for example, a luminance of a specific value among 40 to 60% luminances with respect to the surface luminance 100%. The second luminance may be lower than the luminance of the light of the second boundary R20', and may be, for example, a luminance of a specific value among 40 to 60% luminances with respect to the surface luminance 100%. For example, the light in the area between the first row R1' and the second row R2' may have a luminance (hereinafter, a first target luminance) of a specific value among 140 and 160% luminances with respect to the surface luminance 100% of the first row R1' or the second row R2'. The first target luminance may be lower than the reference luminance between the first row R1 and the second row R2 described above with reference to FIG. 8. If the reference luminance is 150%, the first target luminance may be lower than 150%. If the reference luminance is 160%, the first target luminance may be lower than 160%.

The supporter 39 may be arranged horizontally between the rows R1', R2' (see FIG. 9). At this time, a portion of the area between the rows R1', R2' corresponding to the position of the supporter 39 may have lower luminance than other portions due to the supporter 39, and since the first target luminance is lower than the reference luminance, a stain UL1 due to the supporter 39 may be visible on the screen. As the screen becomes more sensitive to visible stains due to the supporter 39, the reference luminance may become higher. Here, the supporter 39 may be coupled to the coupling portion 83s (see FIGS. 5 and 6) described below by penetrating the substrate 40, 40' and may support the rear surface of the diffusion plate 31.

The light of the first side 51xa of the light sources 51 of the second row R2' may be directed toward the light sources 51 of the third row R3' through the lenses 53. The third boundary R21' may be a boundary of light having a luminance of a certain ratio with respect to the surface luminance of the lenses 53 covering the light sources 51 of the second row R2'. For example, the light reaching the third boundary R21' may have a luminance of a certain value among 50% to 70% luminances with respect to the surface luminance 100%.

The third boundary R21' may be spaced apart from the lenses 53 covering the light sources 51 of the third row R3'. That is, the lenses 53 covering the light sources 51 of the third row R3' may be located outside the third boundary R21'. In other words, the light having a lower luminance than the light of the third boundary R21' may be provided from the light sources 51 of the second row R2' into between the third boundary R21' and the lenses 53 of the third row R3'.

The light of the second side 51xb of the light sources 51 of the third row R3' may be directed toward the light sources 51 of the second row R2' through the lenses 53. The fourth boundary R30' may be a boundary of light having a luminance of a certain ratio with respect to the surface luminance of the lenses 53 covering the light sources 51 of the third row R3'. For example, the light reaching the fourth boundary R30' may have a luminance of a certain value among 50 to 70% luminances with respect to the surface luminance 100%. For example, the light reaching the fourth boundary R30' may have the same luminance as the light reaching the third boundary R21'.

The fourth boundary R30' may be spaced apart from the lenses 53 covering the light sources 51 of the second row R2'. That is, the lenses 53 covering the light sources 51 of the second row R2' may be located outside the fourth boundary R30'. In other words, the light having a lower luminance than light of the fourth boundary R30' may be provided from the light sources 51 of the third row R3' into between the fourth boundary R30' and the lenses 53 of the second row R2'.

Accordingly, the area between the second row R2' and the third row R3' may be covered by the light having a third luminance or higher provided from the light sources 51 of the second row R2' and the light having a fifth luminance or higher provided from the light sources 51 of the third row R3'. The third luminance may be lower than the luminance of the light of the third boundary R21', and may be, for example, a luminance of a specific value among 40 to 60% luminances with respect to the surface luminance 100%. The fourth luminance may be lower than the luminance of the light of the fourth boundary R30', and may be, for example, a luminance of a specific value among 40 to 60% luminances with respect to the surface luminance 100%. For example, the light in the area between the second row R2' and the third row R3' may have a luminance (hereinafter, a second target luminance) of a specific value among 140 to 160% luminances with respect to the surface luminance 100% of the second row R2' or the third row R3'. The second target luminance may be lower than the reference luminance between the first row R1 and the second row R2 described above with reference to FIG. 8. If the reference luminance is 150%, the second target luminance may be lower than 150%. If the reference luminance is 160%, the second target luminance may be lower than 160%.

The supporter 39 may be arranged horizontally between the rows R2', R3' (see FIG. 9). At this time, a portion of the area between the rows R2', R3' corresponding to the position of the supporter 39 may have lower luminance than other portions due to the supporter 39, and since the second target luminance is lower than the reference luminance, a stain UL2 due to the supporter 39 may be visible on the screen. As the screen becomes more sensitive to visible stains due to the supporter 39, the reference luminance may become higher. Here, the supporter 39 may be coupled to the coupling portion 83s (see FIGS. 5 and 6) described below by penetrating the substrate 40, 40', and may support the rear surface of the diffusion plate 31.

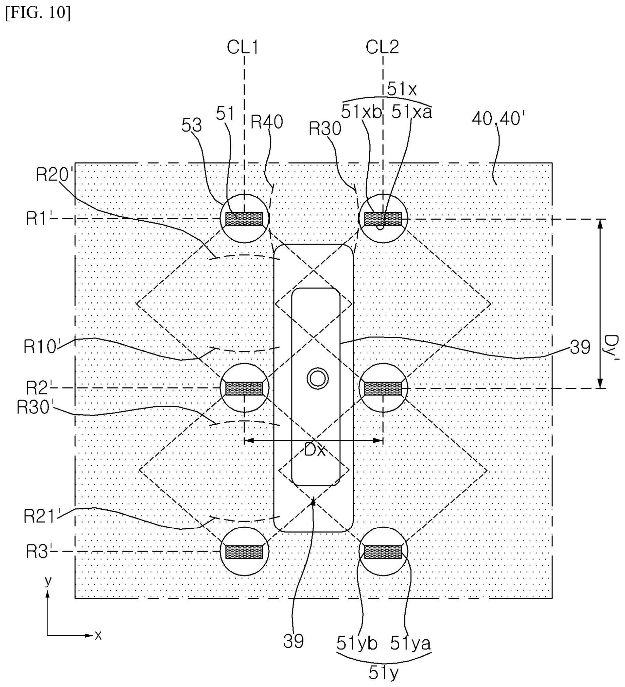

Referring to FIG. 10, the supporter 39 may be arranged vertically between the columns CL1, CL2. At this time, a portion of the area between the columns CL1, CL2 corresponding to the position of the supporter 39 has lower luminance than other portions due to the supporter 39, but the reference luminance (e.g., a luminance of a specific value among 150 to 170% luminances with respect to the surface luminance 100% of the first column CL1 or the second column CL2, see the description regarding FIG. 8) is sufficiently high, so that a stain due to the supporter 39 may not be visible on the screen. As the screen becomes more sensitive to visible stains due to the supporter 39, the reference luminance may become higher. Here, the supporter 39 may be coupled to the coupling portion 83s (see FIGS. 5 and 6) described below by penetrating the substrate 40, 40', and may support the rear surface of the diffusion plate 31.

That is, if the area (i.e., the area between the rows CL1, CL2) between the lenses 53 adjacent to each other in the direction parallel to the long side 51x of the light source 51 is covered with the light of a specific luminance (e.g., light of a specific value among 150 to 170% luminancees described above), but the area (i.e., the area between the rows R1', R2', R3') between the lenses 53 adjacent to each other in the direction parallel to the short side 51y of the light source 51 is covered with the light of a luminance lower than the specific luminance, the supporter 39 may be arranged parallel to the short side 51y (see FIG. 10).

Meanwhile, unlike the above, if the area (i.e., the area between the rows R1', R2', R3') between the lenses 53 adjacent to each other in the direction parallel to the short side 51y of the light source 51 is covered with light of a specific luminance, but the area (i.e., the area between the columns CL1, CL2) between the lenses 53 adjacent to each other in the direction parallel to the long side 51x of the light source 51 is covered with a light of lower luminance than the specific luminance, the supporter 39 may be arranged in parallel to the long side 51x.

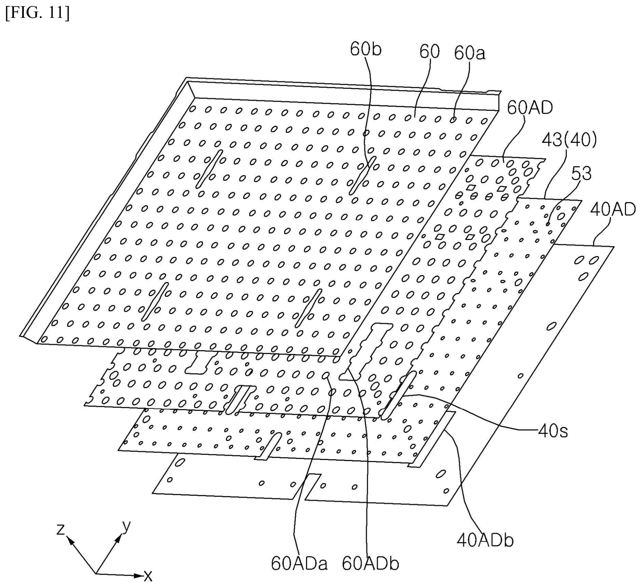

Referring to FIGS. 11 to 15, the coupling portion 83s may be formed on the heat sink 83. Alternatively, the coupling portion 83s may be formed on the flat portion 81 (see FIG. 3) of the frame 80. There may be a plurality of coupling portion 83s. The coupling portion 83s may be formed by being pressed in a forward direction from the rear surface of the heat sink 83 or the rear surface of the flat portion 81, and may extend in a vertical direction. A connector hole 83H may be formed in the heat sink 83, and a mounted connector may be located on the rear surface of the substrate 40.

The rear surface of the substrate 40 may be connected to the front surface of the heat sink 83 through a first adhesive sheet 40AD. The first adhesive sheet 40AD may be a double-sided tape. First sheet holes 40ADb of the first adhesive sheet 40AD and slots 40s of the substrate 40 may be aligned with the coupling portions 83s.

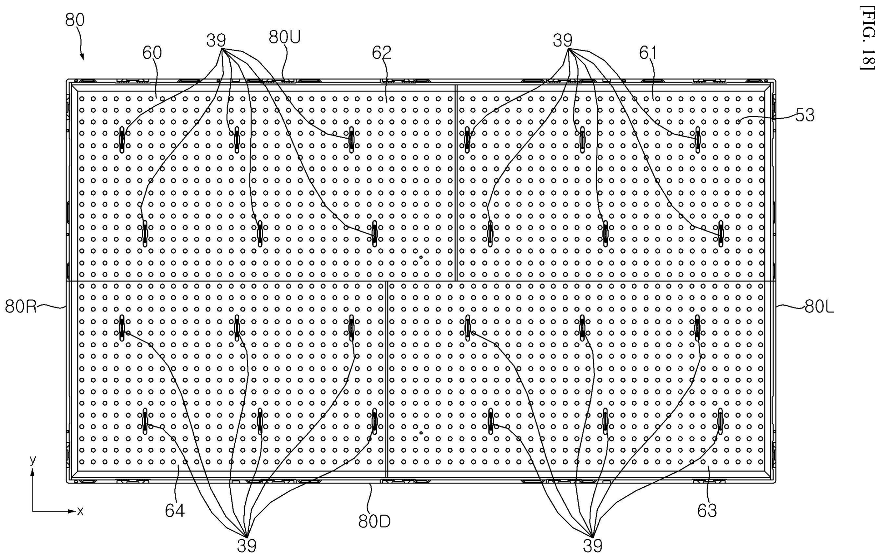

The rear surface of the reflective sheet 60 may be connected to the front surface of the substrate 40 through a second adhesive sheet 60AD. The second adhesive sheet 60AD may be a double-sided tape. A plurality of reflective sheets 61, 62, 63, 64 (see FIG. 18) may cover the front surface of the substrate 40. Second sheet holes 60ADb of the second adhesive sheet 60AD and slots 60b of the reflective sheet 60 may be aligned with the coupling portions 83s. The lenses 53 mounted on the substrate 40 may penetrate the holes 60ADa of the second adhesive sheet 60AD and the holes 60a of the reflective sheet 60.

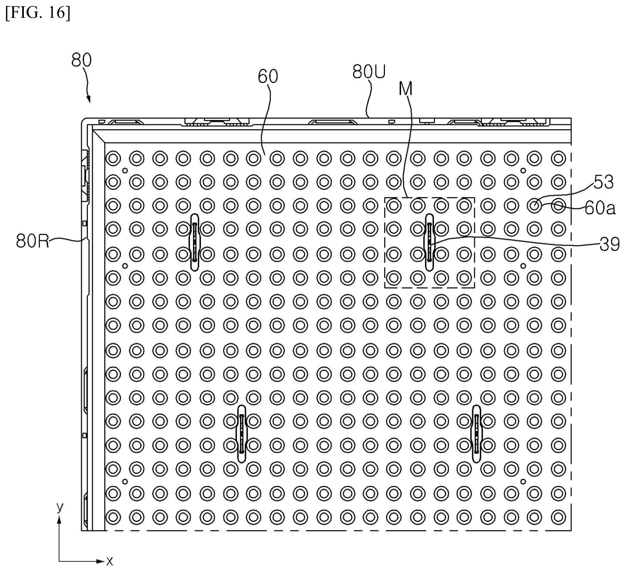

Referring to FIGS. 16 to 18, the supporter 39 may be located on the front surface of the reflective sheet 60. The plurality of supporters 39 may be spaced apart from each other on the reflective sheet 60.

The supporter 39 may be located between the lenses 53, and may extend vertically. For example, the longitudinal axis of the supporter 39 may pass through the center between the lenses 53. For another example, the longitudinal axis of the supporter 39 may be biased towards the lens 53 located on the left side of the supporter 39. For another example, the longitudinal axis of the supporter 39 may be biased towards the lens 53 located on the right side of the supporter 39. The longitudinal axis of the supporter 39 may pass through a point such as 1/5, 2/5, 4/5, 1/3, 2/7, 3/7, 4/7, 5/7, 6/7, 1/9, 2/9, or 3/9 between the lenses 53.

In the horizontal direction, the width W20 of the supporter 39 may be smaller than the distance Dx between the lenses 53. For example, the width W20 may be 1/3 to 1/2 of the distance Dx. Accordingly, in the vertical direction, the supporter 39 may not be located between the lenses 53, and the occurrence of screen stains and deterioration of image quality due to the supporter 39 may be prevented. In addition, damage to the plurality of lenses 53 and the light sources 51 may be prevented during the process of coupling or separating the supporter 39 described later. Meanwhile, the maximum width W20 of the supporter 39 may be formed in the central portion of a base 391a, and both sides of the central portion may have a width W21 smaller than the maximum width W20. Alternatively, the width W20 of the supporter 39 may be constant. Accordingly, the left and right tilting of the supporter 39 coupled to the above and later-described coupling portion 83s may be minimized.

In the vertical direction, the length W10 of the supporter 39 may be larger than the distance Dy' between the lenses 53. For example, the length W10 may be 1.5 to 2.5 times larger than the distance Dy'. In the vertical direction, the length W10 of the base 391a of the supporter 39 may be larger than the length W11 of the body 391 of the supporter 39. Accordingly, the base 391a may minimize the body 391 from tilting up and down.

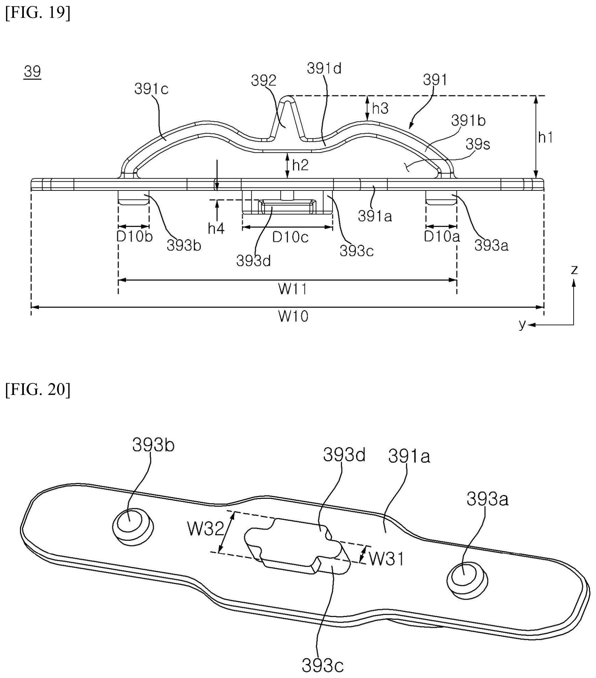

Referring to FIGS. 19 and 20, the supporter 39 may include a body 391, a head 392, and a foot 393a, 393b, 393c, 393d. The body 391 may be referred to as an elastic portion or a deformation portion. The head 392 may be referred to as a front end portion or a tower. The foot 393a, 393b, 393c, 393d may be referred to as a fastening portion or an engaging portion.

The base 391a may be extended in an up-down direction, may be formed narrowly in a left-right direction, and may be formed thinly in a front-rear direction. The base 391a may be flat.

The body 391 may include an elastic portion 391b, 391c, 391d. One end and the other end of the elastic portion 391b, 391c, 391d may be fixed to the front surface of the base 391a. The elastic portion 391b, 391c, 391d may have a semicircular shape having a central portion that is recessed overall. A buffer space 39s may be formed between the base 391a and the elastic portion 391b, 391c, 391d. The elastic portion 391b, 391c, 391d may be referred to as a bridge.

A first part 391b may form one end of the elastic portion 391b, 391c, 391d, and may be curved. A second part 391c may form the other end of the elastic portion 391b, 391c, 391d, and may be curved. A third part 391d may be located between the first part 391b and the second part 391c, and may connect the first part 391b and the second part 391c. The third part 391d may be formed lower than the front ends of the first part 391b and the second part 391c (see h2 of FIG. 19).

The head 392 may protrude in a forward direction from the third part 391d. The front end of the head 392 may be located forward than the front ends of the first part 391b and the second part 391c (see h3 of FIG. 19). The head 392 may be located furthest forward from the base 391a (see h1 of FIG. 19). For example, the front end of the head 392 may be rounded. For another example, the front end of the head 392 may be flat.

The foot 393a, 393b, 393c, 393d may protrude in a rearward direction from the rear surface of the base 391a. The foot 393a, 393b, 393c, 393d may include a first stopper 393a, a second stopper 393b, a protrusion 393c, and an engaging portion 393d.

A first stopper 393a may face the distal end of the first part 391b with respect to the base 391a. The first stopper 393a may have a first diameter D10a. The first stopper 393a may be spaced apart from one end of the base 391a by a certain distance.

A second stopper 393b may face the distal end of the second part 391c with respect to the base 391a. The second stopper 393b may have a second diameter D10b. The second stopper 393b may be spaced apart from the other end of the base 391a by a certain distance.

The protrusion 393c may be located between the first stopper 393a and the second stopper 393b. The protrusion 393c may be formed to be long in the vertical direction and narrow in the horizontal direction. The length D10c of the protrusion 393c may be larger than the width W31 of the protrusion 393c. In the front-rear direction, the protrusion 393c may be aligned with the head 392. The second stopper 393b may be symmetrical with the first stopper 393a with respect to the protrusion 393c.

The engaging portion 393d may be formed on the lateral side of the protrusion 393c. A first portion (not shown) of the engaging portion 393d may protrude to the right from the right surface of the protrusion 393c, and a second portion (not shown) may protrude to the left from the left surface of the protrusion 393c. The engaging portion 393d may be formed parallel to the rear surface of the protrusion 393c (see W32 of FIG. 20).

The supporter 39 may have elasticity. The supporter 39 may be an injection molded product. For example, the supporter 39 may include a plastic or resin material. The supporter 39 may include a material having excellent impact resistance and high-temperature reliability.

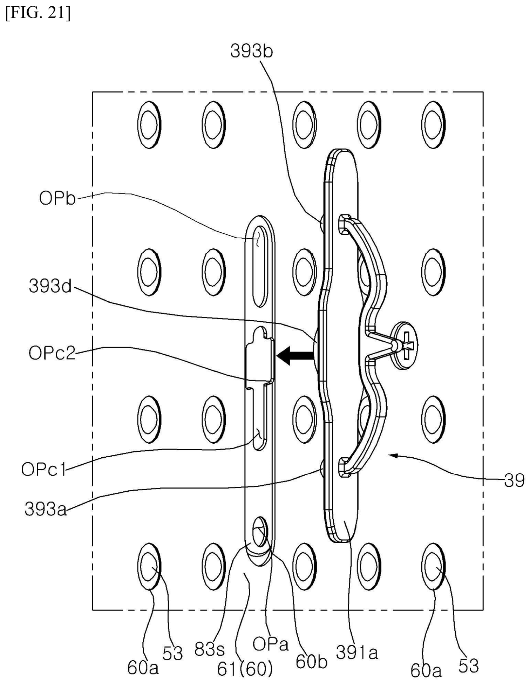

Referring to FIG. 21, the length of the coupling portion 83s may correspond to the length of the supporter 39. The coupling portion 83s may include a first hole OPa, a second hole OPb, an insertion hole OPc1, and an insertion groove OPc2.

The first hole OPa may be adjacent to the lower end of the coupling portion 83s, and may be formed by penetrating the coupling portion 83s. The first hole OPa may be a round hole. The diameter of the first hole OPa may be equal to or slightly larger than the first diameter D10a (see FIG. 19) of the first stopper 393a.

The second hole OPb may be adjacent to the upper end of the coupling portion 83s, and may be formed by penetrating the coupling portion 83s. The second hole OPb may be a vertically long hole. The length of the short axis of the second hole OPb may be equal to or slightly larger than the second diameter D10b (see FIG. 19) of the second stopper 393b. The length of the long axis of the second hole OPb may be larger than the second diameter D10b.

The insertion hole OPc1 may be located between the first hole OPa and the second hole OPb, and may be formed by penetrating the coupling portion 83s. The insertion hole OPc1 may be located closer to the second hole OPb than to the first hole OPa. The insertion hole OPc1 may be a vertically long hole. The length of the short axis of the insertion hole OPc1 may be equal to or slightly larger than the width W31 (see FIG. 20) of the protrusion 393c. The length of the long axis of the insertion hole OPc1 may be larger than the length D10c (see FIG. 19) of the protrusion 393c.

The insertion groove OPc2 may be formed at a portion forming a boundary of the insertion hole OPc2 of the coupling portion 83s. A first portion (not shown) of the insertion groove OPc2 may be recessed to the right from a portion forming a right boundary of the insertion hole OPc2 of the coupling portion 83s. A second portion (not shown) of the insertion groove OPc2 may be recessed to the left from a portion forming a left boundary of the insertion hole OPc2 of the coupling portion 83s. The first portion and the second portion may be aligned from side to side. The first portion and the second portion may be located close to the upper boundary of the insertion hole OPc1. The distance between the first portion and the second portion may be equal to or slightly larger than the width W32 (see FIG. 20) of the engaging portion 393d.

The supporter 39 may be located in front of the coupling portion 83s. The second stopper 393b may be aligned with one side of the second hole OPb. The engaging portion 393d may be aligned with the insertion groove OPc2. At this time, the first stopper 393a may be misaligned with the first hole OPa, and may be located between the insertion hole OPc1 and the first hole OPa.

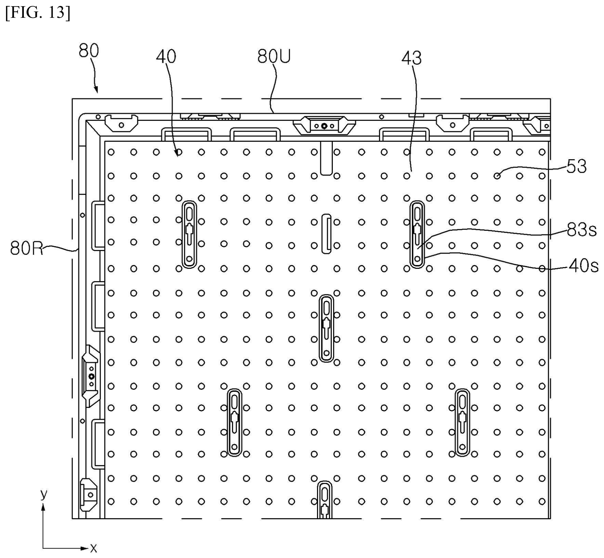

The foot 393a, 393b, 393c, 393d of the supporter 39 may penetrate the slot 60b of the reflective sheet 60. The slot 60b may be formed by penetrating the reflective sheet 60, and may have a length corresponding to the coupling portion 83s. The foot 393a, 393b, 393c, 393d of the supporter 39 may penetrate the slot 40s (see FIG. 4) of the substrate 40. The slot 40s may be formed by penetrating the substrate 40 (see FIGS. 11 and 13), and may have a length corresponding to the coupling portion 83s. Alternatively, the foot 393a, 393b, 393c, 393d of the supporter 39 may be located between the second plates 40b, (see FIGS. 6 and 7) of the substrate 40'.

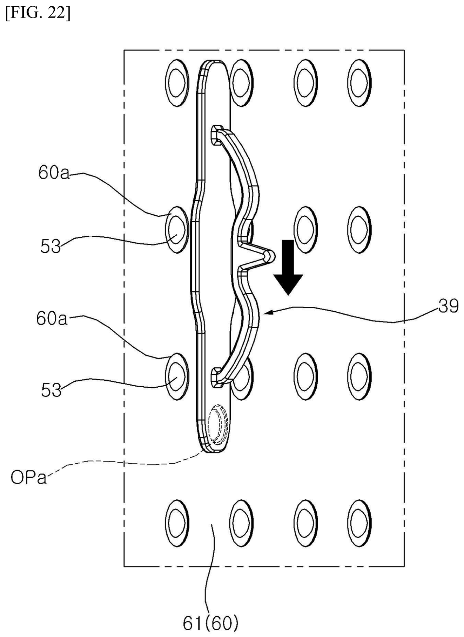

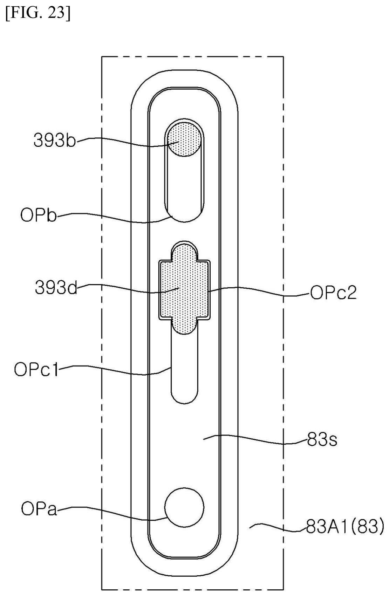

Referring to FIGS. 22 and 23, the second stopper 393b may be inserted into one side of the second hole OPb. The protrusion 393c may be inserted into one side of the insertion hole OPc1. The engaging portion 393d may be inserted into the insertion groove OPc2. At this time, the first stopper 393a (see FIG. 21) may be located between the insertion hole OPc1 and the first hole OPa, and may come into contact with the front surface of the coupling portion 83s.

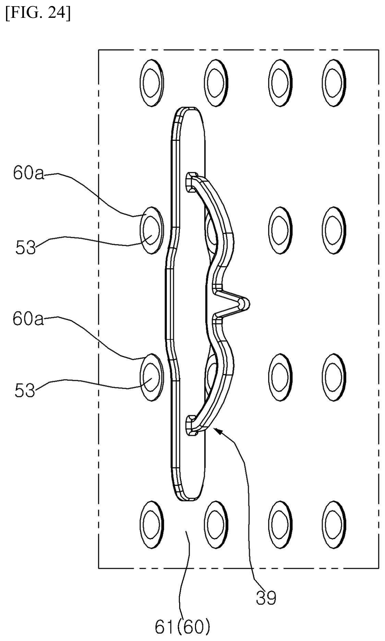

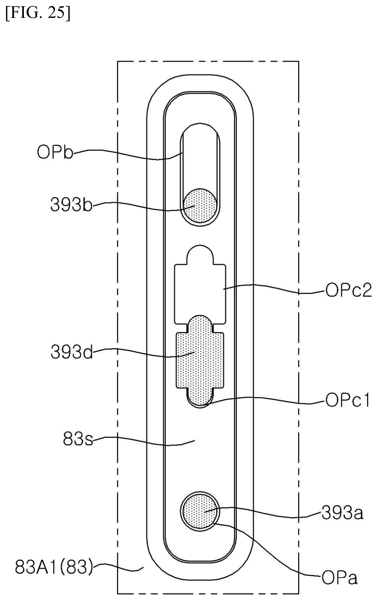

Referring to FIGS. 24 and 25, the second stopper 393b may be moved from one side of the second hole OPb to the opposite side. The protrusion 393c may be moved from one side of the insertion hole OPc1 to the opposite side. The first stopper 393a may be moved from the front surface of the coupling portion 83s toward the first hole OPa, and inserted into the first hole OPa. At this time, the engaging portion 393d may be engaged with the rear surface of the coupling portion 83s.

Accordingly, a user may couple the supporter 39 in the coupling portion 83s or separate it from the coupling portion 83s in a sliding manner. In addition, the size of the base 391a of the supporter 39 may be larger than the size of the slot 60b of the reflective sheet 60 (see FIGS. 21 and 22). That is, the supporter 39 may press the front surface of the reflective sheet 60.

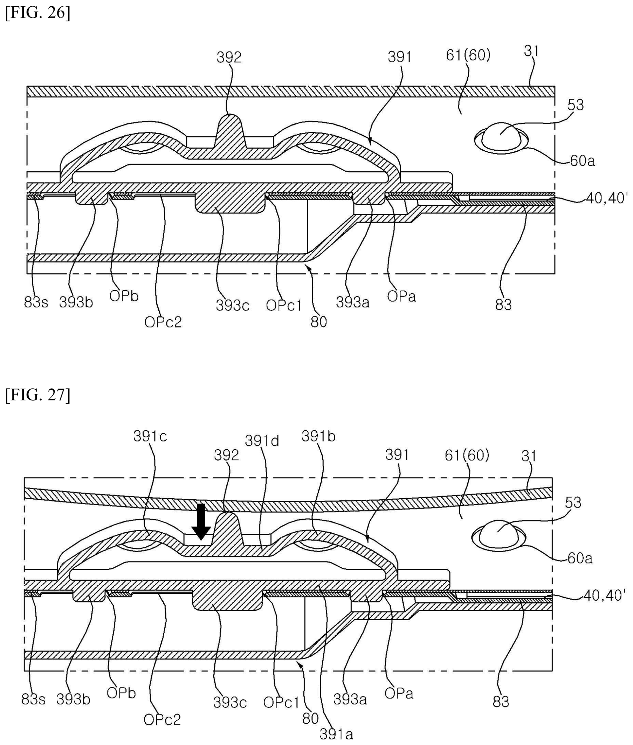

Referring to FIG. 26, the supporter 39 may be located between the reflective sheet 60 and the diffusion plate 31. The head 392 of the supporter 39 may be adjacent to the rear surface of the diffusion plate 31. The head 392 may be in contact with the rear surface of the diffusion plate 31, or may be slightly separated from it.

Referring to FIG. 27, the diffusion plate 31 may be deformed. For example, the transport or storage (particularly, storage with lying down) of the display device may cause deformation of the diffuser plate 31. For example, when the display device is operated, the temperature of the diffusion plate 31 may rise, and the diffusion plate 31 may be deformed. For example, the deformation of the diffusion plate 31 may be sagging.

When the diffusion plate 31 sags down, the head 392 of the supporter 39 may support the diffusion plate 31. Depending on the degree of sagging of the diffusion plate 31, the elastic portion 391b, 391c, 391d may be deformed toward the base 391a. Depending on the degree of restoration of the diffusion plate 31, the elastic portion 391b, 391c, 391d may be restored to their original state by elastic force.

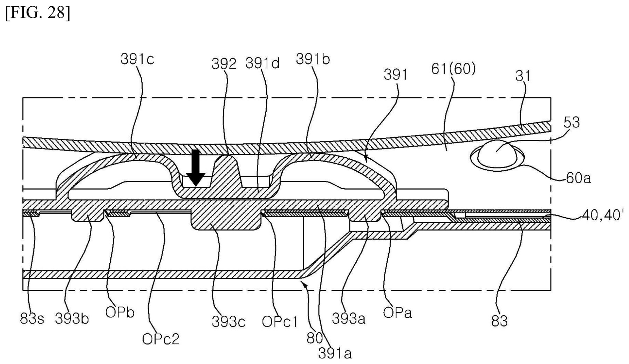

Referring to FIG. 28, when the diffusion plate 31 sags further, not only the head 392 of the supporter 39, but also the first part 391b and/or the second part 391c of the elastic portion 391b, 391c, 391d may support the diffusion plate 31. Depending on the degree of sagging of the diffusion plate 31, the elastic portion 391b, 391c, 391d may be deformed toward the base 391a. Depending on the degree of restoration of the diffusion plate 31, the elastic portion 391b, 391c, 391d may be restored to their original state by elastic force.

For example, the rear surface of the diffusion plate 31 may be in contact with the head 392 and the first part 391b. For another example, the rear surface of the diffusion plate 31 may be in contact with the head 392 and the second part 391c. For another example, the rear surface of the diffusion plate 31 may be in contact with the head 392, the first part 391b, and the second part 391c.

Accordingly, the supporter 39 may support the sagging of the diffusion plate 31 at multiple points. That is, the supporter 39 may maintain a gap between the reflective sheet 60 and the diffusion plate 31 at a certain level while minimizing damage to the diffusion plate 31.

Referring to FIGS. 1 to 28, a display device according to an aspect of the present disclosure may include: a display panel; a frame located at a rear of the display panel; a substrate located between the display panel and the frame; an optical unit located between the display panel and the substrate; a plurality of light sources arranged in a matrix form on the substrate, the plurality of light sources including first light sources located in columns of a first row and second light sources located in columns of a second row; a plurality of lenses which cover the plurality of light sources; and a supporter located on the substrate, and supporting the optical unit, in which, based on a surface luminance of the lens, an area between the columns is covered with light of a specific luminance, an area between the first row and the second row is covered with light with a luminance lower than the specific luminance, and the supporter is located between the columns and extends in a direction intersecting with the first and second rows.

The specific luminance may be a specific value among 150 to 170% of the surface luminance of the lens.

The second light sources may be located outside a first boundary of light output from the first light sources toward the second light sources, the first light sources may be located outside a second boundary of light output from the second light sources toward the first light sources, and a luminance of light of each of the first and second boundaries may be a specific value among *50* to 70% of the surface luminance of the lens.

The supporter may not overlap with the first light sources and the second light sources, in a length direction of the supporter.

A length of the supporter may be larger than a gap between the first row and the second row.

The light source may have a cuboidal shape. a lateral side of the light source may include: long sides which are opposite to each other; and short sides which are opposite to each other, a light distribution area of the long sides may be greater than a light distribution area of the short sides.

The long sides may be parallel to the first and second rows, the short sides may be parallel to the columns, and the supporter may extend along the short sides.

A gap between the first row and the second row may be greater than a gap between the columns.

The supporter may include a plurality of supporters which are spaced apart from each other, and may extend in a same direction.

The substrate may include a slot through which a portion of the supporter penetrates, and a portion of the supporter may be detachably coupled to the frame.

The substrate may include: a first plate extending along the first and second rows; and a second plates extending from the first plate along the columns, a portion of the supporter may be located between the second plates, and is detachably coupled to the frame.

The display device may further include a reflective sheet located on the substrate, and including holes in which the plurality of lenses are located, the supporter may include: a base which extends in a length direction of the supporter, and which is located on the reflective sheet; and an engaging portion which protrudes from a rear surface of the base, which penetrates the reflective sheet, and which is coupled to the frame.

The supporter may further include: an elastic portion which is elastic, which has one end and the other end fixed to a front surface of the base, the elastic portion spaced in a forward direction from the front surface of the base between the one end and the other end; and a head protruding toward the optical unit on the elastic portion.

A length of the base may be longer than a distance between the one end and the other end of the elastic portion.

A maximum width of the supporter may be defined at a central portion of the base.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings, and a configuration "B" described in another embodiment of the disclosure and the drawings may be combined with each other. Namely, although the combination between the configurations is not directly described, the combination is possible except in the case where it is described that the combination is impossible.

The above detailed description is to be construed in all aspects as illustrative and not restrictive. The scope of the present disclosure should be determined by reasonable interpretation of the appended claims, and all changes coming within the equivalency range of the present disclosure are intended to be embraced in the scope of the present disclosure.

## Claims

1. A display device comprising:
a display panel;
a frame located behind the display panel;
a substrate located between the display panel and the frame;
an optical unit located between the display panel and the substrate;
a plurality of light sources arranged in a matrix form on the substrate, the plurality of light sources including first light sources located in columns of a first row and second light sources located in columns of a second row;
a plurality of lenses which cover the plurality of light sources; and
a supporter located on the substrate, and supporting the optical unit,
wherein, based on a surface luminance of the lens, an area between the columns is covered with light of a specific luminance, an area between the first row and the second row is covered with light with a luminance lower than the specific luminance, and
wherein the supporter is located between the columns and extends in a direction intersecting with the first and second rows.

2. The display device of claim 1, wherein the specific luminance is a specific value among 150 to 170% of the surface luminance of the lens.

3. The display device of claim 2, wherein the second light sources are located outside a first boundary of light
output from the first light sources toward the second light sources, and
wherein the first light sources are located outside a second boundary of light output from the second light sources toward the first light sources,
wherein a luminance of light of each of the first and second boundaries is a specific value among 50 to 70% of the surface luminance of the lens.

4. The display device of claim 1, wherein the supporter does not overlap with the first light sources and the second light sources, in a length direction of the supporter.

5. The display device of claim 1, wherein a length of the supporter is larger than a gap between the first row and the second row.

6. The display device of claim 1, wherein the light source has a cuboidal shape, wherein a lateral side of the light source comprises:
long sides which are opposite to each other; and
short sides which are opposite to each other,
wherein a light distribution area of the long sides is greater than a light distribution area of the short sides.

7. The display device of claim 6, wherein the long sides are parallel to the first and second rows,
wherein the short sides are parallel to the columns, and
wherein the supporter extends along the short sides.

8. The display device of claim 7, wherein a gap between the first row and the second row is greater than a gap between the columns.

9. The display device of claim 1, wherein the supporter comprises a plurality of supporters which are spaced apart from each other, and extend in a same direction.

10. The display device of claim 1, wherein the substrate comprises a slot through which a portion of the
supporter penetrates,
wherein the portion of the supporter is detachably coupled to the frame.

11. The display device of claim 1, wherein the substrate comprises:
a first plate extending along the first and second rows; and
a second plates extending from the first plate along the columns,
wherein a portion of the supporter is located between the second plates, and is detachably coupled to the frame.

12. The display device of claim 1, further comprising a reflective sheet located on the substrate, and including
holes in which the plurality of lenses are located,
wherein the supporter comprises:
a base extending in a length direction of the supporter, and located on the reflective sheet; and
an engaging portion protruding from a rear surface of the base, penetrating the reflective sheet, and coupled to the frame.

13. The display device of claim 12, wherein the supporter further comprises:
an elastic portion which is elastic, which has one end and the other end fixed to a front surface of the base, the elastic portion spaced in a forward direction from the front surface of the base between the one end and the other end; and
a head protruding toward the optical unit on the elastic portion.

14. The display device of claim 13, wherein a length of the base is longer than a distance between the one end and the other end of the elastic portion.

15. The display device of claim 13, wherein a maximum width of the supporter is defined at a central portion of the base.
